**Europäisches Patentamt**

**European Patent Office**

**Office européen des brevets**

(19)

(11) Veröffentlichungsnummer : **0 181 652 B1**

(12) **EUROPÄISCHE PATENTSCHRIFT**

(45) Veröffentlichungstag der Patentschrift :
**27.07.88**

(51) Int. Cl.⁴ : **F 02 F 3/02**, F 16 J 1/02,
F 16 J 1/08

(21) Anmeldenummer : **85201557.7**

(22) Anmeldetag : **27.09.85**

(54) **Leichtmetallkolben.**

(30) Priorität : **10.10.84 DE 3437111**

(43) Veröffentlichungstag der Anmeldung :
**21.05.86 Patentblatt 86/21**

(45) Bekanntmachung des Hinweises auf die Patenterteilung : **27.07.88 Patentblatt 88/30**

(84) Benannte Vertragsstaaten :
**DE FR GB IT**

(56) Entgegenhaltungen :
**EP-A- 0 009 269
EP-A- 0 072 228
WO-A-80 /007 38
WO-A-80 /017 04
DE-A- 2 046 978
DE-A- 2 446 870
GB-A- 1 504 019
US-A- 1 524 715
US-A- 1 557 625**

(73) Patentinhaber : **KOLBENSCHMIDT Aktiengesellschaft
Christian-Schmidt-Strasse 8/12 Postfach 1351
D-7107 Neckarsulm (DE)**

(72) Erfinder : **Sander, Wilfried
Reutlinger Strasse 60
D-7107 Neckarsulm (DE)**
Erfinder : **Essig, Gunder, Dr.
Schöttlestrasse 42
D-7100 Heilbronn (DE)**
Erfinder : **Wacker, Erich, Dr.
Hegelmaierstrasse 3
D-7100 Heilbronn (DE)**

(74) Vertreter : **Rieger, Harald, Dr.
Reuterweg 14
D-6000 Frankfurt am Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Leichtmetallkolben für Brennkraftmaschinen mit ballig-ovaler Außenform, dessen tragenden Schaftflächen jeweils durch eine in Umfangsrichtung verlaufende Einbuchtung in zwei tragende Teilschaftflächen aufgeteilt sind.

Heute erhalten nahezu alle Leichtmetallkolben für Brennkraftmaschinen eine formbearbeitete Lauffläche, die den thermischen und mechanischen Gegebenheiten im Motorbetrieb gerecht wird. Es besteht deshalb für alle Kolbengrößen und Kolbenausführungen eine Vielzahl von ballig-ovalen Außenformen mit dem Ziel, ein kleines Laufspiel zu erzeugen, ohne dadurch an Freßsicherheit zu verlieren. Die ballige Form des Kolbens im Kaltzustand entsteht durch den gekrümmten Verlauf der Mantellinie des Kolbenschafts, der notwendig ist, um den Temperaturverlauf längs des Kolbenschafts um die jeweils damit verbundene Ausdehnung auszugleichen. Diese sogenannte Schleifkurve ist am oberen Ende des Kolbenschafts wegen der dort im Motorbetrieb herrschenden, vergleichsweise hohen Temperaturen und zur Erzeugung guter Schmierverhältnisse, d. h. zur Schmierkeilbildung, meist stark eingezogen und in der Mitte leicht gekrümmt ausgebildet. Am Schaftende kann sie wegen der Schmierverhältnisse wiederum leicht eingezogen sein oder auch gradlinig auslaufen.

Infolge der Ovalität des Kolbenschafts, deren kleine Halbachse die gleiche Richtung wie die Bolzenachse besitzt, werden die temperaturbedingte Volumen- und Umfangslängenzunahme des Kolbens in Richtung der Bolzenachse umgelenkt und andererseits Schaftverformungen, hervorgerufen durch die Gleitbahnkraft, aufgefangen. Es ist dabei notwendig, daß der Kolbenschaft auch bei voller Beanspruchung im Motorbetrieb noch eine Ovalitätsreserve hat. Infolge der Schwenkbewegung der Pleuelstange und der dadurch senkrecht zur Kolbenbolzenachse eingeleiteten, aus der Kraftzerlegung der Gaskraft herrührenden, veränderlichen Gleitbahnkraft trägt der Kolben im Motorbetrieb im wesentlichen in den Bereichen beidseitig der Laufebene, die die Kolbenbolzenachse und die senkrecht zur Kolbenbolzenachse verlaufende Richtung — Druck-/Gegendruckrichtung — umfaßt. Da in diesen Bereichen nicht über den gesamten Kolbenweg ein hydrodynamischer Schmierfilm gewährleistet ist, kommt es in der Nähe der unteren sowie der oberen Totlage zu Mischreibung zwischen Kolben und Zylinderwand. Dadurch bildet sich auf der Druck- und Gegendruckseite des Kolbenschafts eine im allgemeinen als Tragbild beschriebene Verschleißerscheinung mit etwa parabelförmigen seitlichen Begrenzungslinien aus, die sich beidseitig der Laufebene, bezogen auf eine Kolbenschafthälfte, jeweils über einen Abschnitt von bis zu 45° erstrecken. Bei der nach diesen Gesichtspunkten erfolgenden Gestaltung des Kolbens bringt man einen möglichst großen Teil des Kolbenschaftes mit der Zylinderwand zum Zwecke der sicheren Aufnahme der Seitenkräfte in Kontakt. Sowohl die am Tragbild des Kolbenschaftes erkennbare Mischreibung als auch die hydrodynamische, d. h. durch Scherkräfte im Schmierfilm zwischen den sich nicht direkt berührenden Laufpartnern entstehende Reibung zwischen Kolben und Zylinderwand führt zu Reibungsverlusten, die bis zu 15 % der gesamtreibung der Brennkraftmaschine betragen. Obwohl die hydrodynamischen Reibkräfte i. a. kleiner als die Reibkräfte bei Mischreibung sind, tragen sie doch den größten Anteil zur Reibleistung bei, da im überwiegenden Teil des Hubweges die Gleitgeschwindigkeit des Kolbens zur Ausbildung hydrodynamischer Schmierung führt. Da die hydrodynamische Reibung in etwa proportional der Fläche des tragenden Schmierfilms ist, kann eine Verkleinerung der tragenden Schaftflächen somit zu einer Erhöhung der Leistung der Brennkraftmaschine bzw. zu einer Kraftstoffeinsparung führen.

So ist in der Z. Kraftfahrzeugtechnik, Heft 12, 1976, Berlin, Seiten 364 bis 367 u. a. vorgeschlagen, zur Senkung der Kolbenschaftreibung die tragenden Kolbenschaftflächen durch die Anordnung jeweils eines Gleitringes im Bereich des oberen und unteren Schaftendes in zwei Tragflächen aufzuteilen. Ferner ist in der DE-A 32 28 982 ein Kolben vorgesehen, bei dem in den Bereichen beidseitig der Laufebene eine oder mehrere getrennte, relativ kleine, mit der Zylinderwand in Kontakt stehende Lagerflächen angeordnet sind. Die Randbereiche der Lagerflächen sind so ausgebildet, daß das Schmiermittel zur zugeordneten Lagerfläche und zwischen Kolben und Zylinderwand geleitet wird. Dadurch entsteht ebenso wie bei dem Kolben nach der Z. Kraftfahrzeugtechnik, Heft 12, 1976 bei voller Belastung eine erhöhte Flächenpressung, verbunden mit Verschleiß und der Gefahr des Fressens, weil nur diskrete Lagerflächen zur Anlage kommen können und keine Reservelagerflächen bestehen. Auch wenn die Lagerflächen so bemessen sind, daß unter normalen Betriebsverhältnissen eine störungsfreie Funktion gewährleistet ist, besteht dennoch die Gefahr, daß bei Überlastung oder ungünstigen Schmierbedingungen, wie sie in der Praxis hin und wieder vorkommen, die Lagerflächen fressen oder vorzeitig verschleißen.

Aus MTZ Motortechnische Zeitschrift 40 (1979) 10, S. 462 ist schließlich ein Serienkolben bekannt, bei dem die Schaftfläche durch einen Freischliff in Richtung Bolzenachse und einen ringförmigen Einstich um 59 % reduziert ist, wodurch zwar eine Senkung des Kraftstoffverbrauchs bei 50 km/h um ca. 6 % erzielt, jedoch in nachteiliger Weise der Schmiermittelverbrauch erhöht und die Führung des Kolbens beeinträchtigt wird.

Zum Zwecke der Gewichtssenkung sind Leichtmetallkolben in Anwendung, bei denen der Kolbenschaft im Bereich der Naben beidseitig der horizontalen Kolbenbolzenebene unter Bildung jeweils einer Aussparung sehnenartig gegenüber dem Schaftmantel zurückgesetzt ist (EP-A-0 009 269).

Es ist die Aufgabe der vorliegenden Erfindung, bei einem Leichtmetallkolben der eingangs beschriebenen Bauart die Reibungsverluste sowie den Schmiermittelverbrauch zu senken, jedoch die anderen Funktionen des Kolbens zu gewährleisten.

Die Lösung dieser Aufgabe besteht darin, daß die Tiefe der zwischen dem Einzug der Schleifkurve der Balligkeit am oberen und demjenigen am unteren Schaftende verlaufenden Einbuchtung etwa dem doppelten Wert der Rauhtiefe des auf den Schaft aufgebrachten Drehprofils und die durch die Aussparungen begrenzte Breite der tragenden Teilschaftflächen und der Einbuchtung wenigstens der Breite ihres Tragbildes entsprechen, wobei die Höhe der Einbuchtung so bemessen ist, daß die Einbuchtung in der unteren Totlage des Kolbens im Motorbetrieb nicht aus dem Zylinder austaucht und im Kaltzustand des Motors zwischen der oberen Grenze der Einbuchtung und der unteren Grenze des Einzugs der Schleifkurve am oberen Schaftende ein 1,5 bis 4,5 mm, vorzugsweise 1,5 bis 2,5 mm hoher Bereich der tragenden Teilschaftflächen achsparallel verläuft. Durch eine derartige Gestaltung des Kolbenschaftes wird ein besseres Aufschwimmen auf dem Schmiermittelfilm erreicht, so daß sich die Reibungsverluste deutlich verringern und günstigere Gleitverhältnisse ergeben. Bedingt durch die vergleichsweise geringe Tiefe stellt die Einbuchtung ein ausgezeichnetes Schmiermittelreservoir dar, das zur Aufrechterhaltung der hydrodynamischen Schmierung in den tragenden Teilschaftflächen beiträgt. Ein besonderer Vorteil ist darin zu sehen, daß eine Zunahme der Flächenpressung mit steigender Belastung unterbleibt, weil die bei Teillast zur Anlage kommenden vergleichsweise schmalen Bereiche der tragenden Teilschaftflächen mit zunehmender Belastung immer breiter werden, d. h. — bezogen auf eine Kolbenschafthälfte — sich jeweils über einen Umfang von bis zu 90° erstrecken. Die notwendige Geradführung des Kolbens im Zylinder ist unter allen Betriebszuständen gewährleistet.

Im Rahmen der Ausgestaltung der Erfindung beträgt die Rauhtiefe des auf den Kolbenschaft aufgebrachten Drehprofils 5 bis 10 μm, vorzugsweise 5 bis 7 μm, so daß die Einbuchtung eine Tiefe von 10 bis 20 μm, vorzugsweise 10 bis 14 μm, aufweist. Der obere Grenzwert der Tiefe der Einbuchtung sollte nicht überschritten werden, da sich sonst eine zu große Schmiermittelmenge in der Einbuchtung ansammelt und dadurch die Schmiermittelkontrolle beeinträchtigt wird. Der untere Grenzwert der Tiefe der Einbuchtung gewährleistet, daß auch nach einem gewissen Verschleiß des Drehprofils die Funktion der Einbuchtung im Hinblick auf eine Unterbrechung des geschlossenen Schmiermittelfilms zwischen den tragenden Teilschaftflächen erhalten bleibt.

Zweckmäßigerweise sind die Übergänge der Einbuchtungen in die nach oben und unten anschließenden tragenden Teilschaftflächen verrundet ausgebildet. Im Falle eines gewissen Verschleißes des Drehprofils nach längerer Laufzeit des Kolbens ist auf diese Weise sichergestellt, daß sich keine nach oben gerichtete Kante ausbildet, die den Schmiermittelverbrauch nachteilig beeinflußen könnte.

Die die Breite der tragenden Teilschaftflächen und der Einbuchtungen, die nicht wesentlich größer als die Breite des Tragbildes ist, begrenzenden Aussparungen sind Freigüsse, Freischliffe oder Fräsungen.

Es hat sich als besonders vorteilhaft herausgestellt, wenn die erfindungsgemäßen Maßnahmen auf einen Leichtmetallkolben angewendet werden, bei dem der äußere Abstand der gegenüber dem Schaftmantel zurückgesetzten Bolzennaben 60 bis 80 %, vorzugsweise 65 bis 75 % und die Breite der tragenden Teilschaftflächen sowie der Einbuchtungen 70 bis 90 % des Kolbendurchmessers betragen.

Vorzugsweise eignet sich die Erfindung für einen Leichtmetallkolben mit einem im oberen einen vergleichsweise geringen Einzug der Schleifkurve aufweisenden Schaftende zwischen Kolbenbolzennaben und unterster Ringnut eingegossenen Stahlring und mit Trennung des Kolbenkopfes vom Schaft auf der Druck- und Gegendruckseite über einen Bereich von jeweils 90 bis 120° verlaufenden Querschlitz.

Die Erfindung ist in der Zeichnung beispielhaft dargestellt und wird nachfolgend näher erläutert. Es zeigen:

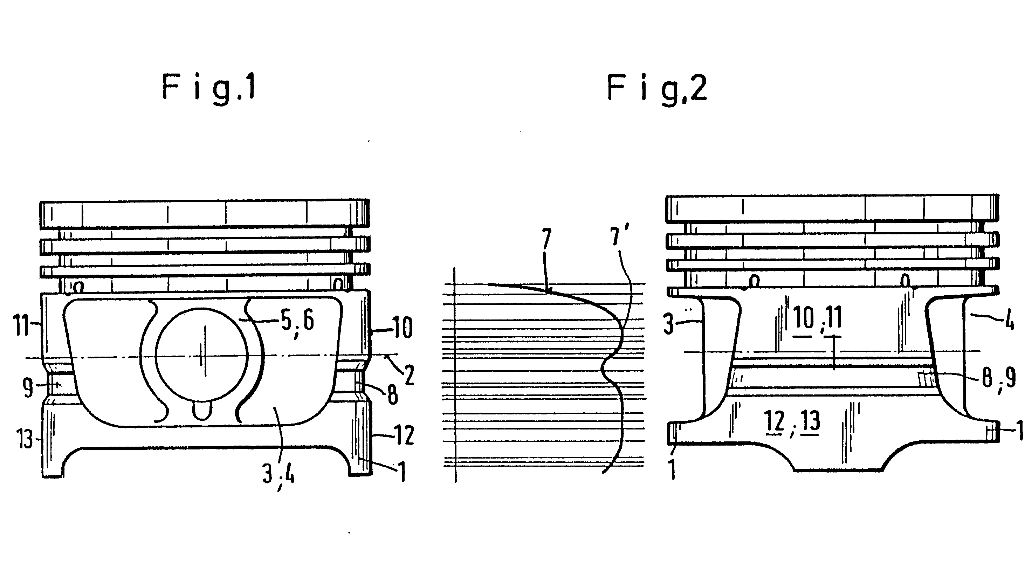

Fig. 1 eine Seitenansicht des Kolbens in Richtung der Bolzenachse mit zugehöriger Schleifkurve.

Fig. 2 eine Seitenansicht des Kolbens auf die Druck- bzw. Gegendruckseite.

Bei dem Kolben ist der Schaft (1) beidseitig der horizontalen Kolbenbolzenebene (2) sehnenartig gegenüber dem Schaftmantel zurückgesetzt, so daß sich die Aussparungen (3, 4) ergeben und die Bolzennaben (5, 6) weit zur Mitte verschoben sind. Der äußere Abstand der Bolzennaben (5, 6) beträgt lediglich 70 % und der eingesetzte Kolbenbolzen besitzt eine Gesamtlänge von 65 % des Kolbendurchmessers. Der Schaft (1) weist am unteren Ende eine runde Schaftform auf. Die ballig-ovale Außenform des Kolbens besitzt eine Schleifkurve (7), die am oberen Ende des Schaftes (1) stärker als am unteren Schaftende eingezogen ist und die unterhalb der horizontalen Kolbenbolzenebene (2) eine in Umfangsrichtung verlaufende Einbuchtung (8, 9) besitzt, deren Tiefe 18 μm beträgt, deren Übergangsbereiche in die anschließenden tragenden Teilschaftflächen (10, 11, 12, 13) verrundet ausgebildet sind und deren Höhe so bemessen ist, daß diese in der unteren Totlage des Kolbens nicht aus dem Zylinder austaucht und im Kaltzustand des Motors zwischen der oberen Grenze der Einbuchtung (8, 9) und der unteren Grenze (7') des Einzugs der Schleifkurve (7) am oberen Schaftende ein Teil der tragenden Teilschaftflächen (10, 11, 12, 13) achsparallel verläuft.

**Patentansprüche**

1. Leichtmetallkolben für Brennkraftmaschinen mit ballig-ovaler Außenform, dessen tragenden Schaftflächen durch eine in Umfangsrichtung verlaufende Einbuchtung jeweils in zwei tragende Teilschaftflächen aufgeteilt sind, dadurch gekennzeichnet, daß der Kolbenschaft (1) im Bereich der Naben (5, 6) beidseitig der horizontalen Kolbenbolzenebene unter Bildung jeweils einer Aussparung (3, 4) sehnenartig gegenüber dem Schaftmantel zurückgesetzt ist, die Tiefe der zwischen dem Einzug der Schleifkurve (7) der Balligkeit am oberen und demjenigen am unteren Schaftende verlaufenden Einbuchtung (8, 9) etwa dem doppelten Wert der Rauhtiefe des auf den Schaft (1) aufgebrachten Drehprofils entspricht und die Höhe der Einbuchtung (8, 9) so bemessen ist, daß diese in der unteren Totlage nicht aus dem Zylinder austaucht und im Kaltzustand des Motors zwischen der oberen Grenze der Einbuchtung und der unteren Grenze (7') des Einzugs der Schleifkurve (7) am oberen Schaftende ein 1,5 bis 4,5 mm, vorzugsweise 1,5 bis 2,5 mm hoher Bereich der tragenden Teilschaftflächen (10, 11, 12, 13) achsparallel verläuft, wobei die durch die Aussparungen begrenzte Breite der tragenden Teilschaftflächen (10, 11, 12, 13) und der Einbuchtung (8, 9) wenigstens der Breite des Tragbildes entsprechen.

2. Leichtmetallkolben nach Anspruch 1, dadurch gekennzeichnet, daß die Rauhtiefe des auf den Schaft (1) aufgebrachten Drehprofils 5 bis 10 μm, vorzugsweise 5 bis 7 μm, beträgt.

3. Leichtmetallkolben nach den Ansprüchen 1 und 2, dadurch gekennzeichnet, daß die Übergänge der Einbuchtungen (8, 9) in die nach oben und unten anschließenden tragenden Teilschaftflächen (10, 11, 12, 13) verrundet ausgebildet sind.

4. Leichtmetallkolben nach den Ansprüchen 1 bis 3, dadurch gekennzeichnet, daß die die Breite der tragenden Teilschaftflächen (10, 11, 12, 13) und der Einbuchtungen (8, 9), die nicht wesentlich größer als die Breite des Tragbildes ist, begrenzenden Aussparungen (3, 4) Freigüsse, Freischliffe oder Fräsungen sind.

5. Leichtmetallkolben nach den Ansprüchen 1 bis 4, dadurch gekennzeichnet, daß die Breite der unteren Teilschaftflächen (12, 13) größer als diejenige der oberen Teilschaftflächen (10, 11) ist.

6. Leichtmetallkolben nach einem oder mehreren der Ansprüche 1 bis 5, dadurch gekennzeichnet, daß der äußere Abstand der gegenüber dem Schaftmantel zurückgesetzten Bolzennaben (5, 6) 60 bis 80 %, vorzugsweise 65 bis 75 % und die Breite der tragenden Teilschaftflächen (10, 11, 12, 13) sowie der Einbuchtungen (8, 9) 70 bis 90 % des Kolbendurchmessers betragen.

7. Leichtmetallkolben nach einem oder mehreren der Ansprüche 1 bis 6, gekennzeichnet durch einen im oberen Schaftbereich eingegossenen Stahlring, eine Trennung des Kolbenkopfs vom Schaft auf der Druck- und Gegendruckseite durch einen sich über einen Bereich von jeweils 90 bis 120° erstreckenden Querschlitz und eine Schleifkurve mit im oberen Schaftbereich vergleichsweise geringem Einzug.

**Claims**

1. Light alloy piston for internal combustion engines, which piston has a cambered oval external shape, the load-carrying skirt surfaces of which are divided in each case into two load-carrying partial skirt surfaces by a depression running in circumferential direction, characterised in that in the region of the bosses (5, 6) on both sides of the horizontal piston pin plane with the formation of in each case a recess (3, 4), the piston skirt (1) is set back in the manner of a chord with respect to the envelope of the skirt, the depth of the depression (8, 9) between the tapered portions of the curved generatrix (7) of the camber at the top and bottom ends of the skirt is approximately twice the peak-to-valley height of the machined profiled surface applied to the skirt (1), and the height of the depression (8, 9) is dimensioned such that the depression does not protrude from the cylinder when the piston is at its lower dead centre and in the cold state of the engine between the upper limit of the depression and the lower limit (7') of the tapered portion of the curved generatrix (7) at the top end of the skirt a region with a height of 1.5 to 4.5 mm, preferably 1.5 to 2.5 mm of the load-carrying partial skirt surfaces (10, 11, 12, 13) runs in an axially parallel manner, in which the width of the load-carrying partial skirt surfaces (10, 11, 12, 13), delimited by the recesses, and of the depression (8, 9) correspond at least to the width of the wear pattern area.

2. Light alloy piston according to Claim 1, characterised in that the peak-to-valley height of the machined profiled surface applied to the skirt (1) is 5 to 10 μm, preferably 5 to 7 μm.

3. Light alloy piston according to Claims 1 and 2 characterised in that the transitions between the depressions (8, 9) with the adjoining upper and lower load-carrying partial skirt surfaces (10, 11, 12, 13) are rounded.

4. Light alloy piston according to Claims 1 to 3, characterised in that the recesses (3, 4) delimiting the width of the load-carrying partial skirt surfaces (10, 11, 12, 13) and of the depressions (8, 9), which is not substantially greater than the wear pattern area, are freely cast, freely ground or milled.

5. Light alloy piston according to Claims 1 to 4, characterised in that the width of the lower partial skirt surfaces (12, 13) is greater than that of the upper partial skirt surfaces (10, 11).

6. Light alloy piston according to Claims 1 to 5, characterised in that the external spacing of the pin bosses (5, 6) which are set back with respect to the envelope of the skirt amounts to 60 to 80 %, preferably 65 to 75 % of the piston diameter, and

4

the width of the load-carrying partial skirt surfaces (10, 11, 12, 13) and of the depressions (8, 9) amounts to 70 to 90 % of the piston diameter.

7. Light alloy piston according to Claims 1 to 6, characterised by a steel ring cast in the upper skirt region, a separation of the piston head from the skirt on the pressure- and back pressure sides by a transverse slot extending over a region of respectively 90 to 120°, and a generatrix with a relatively small tapered portion in the upper skirt region.

**Revendications**

1. Piston en métal léger pour moteurs à combustion interne possédant, une forme extérieure ovale-bombée, et dont les surfaces portantes de la jupe sont subdivisées par un renforcement périphérique en deux surfaces portantes partielles, caractérisé par le fait que la jupe de piston (1) est en retrait, selon une corde, par rapport à son enveloppe, au voisinage des bossages (5, 6) de part et d'autre du plan horizontal passant par l'axe du piston, en formant des évidements respectifs (3, 4), que la profondeur du renforcement (8, 9) qui s'étend entre le creux du profil extérieur bombé (7) du piston et qui est prévu à l'extrémité supérieure de la jupe et le creux correspondant prévu à l'extrémité inférieure de la jupe, est égale approximativement au double de la profondeur de rugosité du profil, ménagé au tour, de la jupe (1) et que la hauteur du renforcement (8, 9) est dimensionnée de manière que ce dernier ne déborde pas du cylindre lorsque le piston est dans la position de point mort inférieure et que, lorsque le moteur est froid, une partie des surfaces portantes partielles (10, 11, 12, 13) de la jupe, possédant une hauteur comprise entre 1,5 et 4,5 mm et de préférence entre 1,5 et 2,5 mm, s'étend parallèlement à l'axe entre la limite supérieure du renforcement et la limite inférieure (7') du creux du profil extérieur (7) du piston, prévu à l'extrémité supérieure de la jupe, auquel cas la largeur, limitée par les évidements, des surfaces portantes partielles (10, 11, 12, 13) de la jupe et du renforcement (8, 9)

correspond au moins à la largeur de la zone portante de la surface de la jupe.

2. Piston en métal léger suivant la revendication 1, caractérisé par le fait que la profondeur de rugosité du profil formé au tour sur la jupe (1) est comprise entre 5 et 10 μm et de préférence entre 5 et 7 μm.

3. Piston en métal léger suivant les revendications 1 et 2, caractérisé par le fait que les jonctions des renfoncements (8, 9) avec les surfaces portantes partielles (10, 11, 12, 13) de la jupe, qui s'y raccordent vers le haut et vers le bas, sont arrondies.

4. Piston en métal léger suivant les revendications 1 à 3, caractérisé par le fait que les évidements (3, 4), qui limitent la largeur des surfaces portantes partielles (10, 11, 12, 13) de la jupe et des renfoncements (8, 9), qui n'est pas très supérieure à la largeur de la zone portante de la surface de la jupe, sont formées par des cavités de coulée ou des évidements dégagés par meulage ou fraisage.

5. Piston en métal léger suivant les revendications 1 à 4, caractérisé par le fait que la largeur des surfaces partielles inférieures (12, 13) de la jupe est supérieure à celle des surfaces partielles supérieures (10, 11) de la jupe.

6. Piston en métal léger suivant une ou plusieurs des revendications 1 à 5, caractérisé par le fait que la distance extérieure des bossages (5, 6) de l'axe de piston, qui sont en retrait par rapport à l'enveloppe de la jupe, est comprise entre 60 et 80 % et de préférence entre 65 et 75 % du diamètre du piston et que la largeur des surfaces portantes partielles (10, 11, 12, 13) de la jupe ainsi que des renfoncements (8, 9) est comprise entre 70 et 90 % du diamètre du piston.

7. Piston en métal léger suivant une ou plusieurs des revendications 1 à 6, caractérisé par un segment en acier, coulé dans la partie supérieure de la jupe, par une séparation entre la tête du piston et la jupe sur le côté de pression et de contre-pression et formée par une fente transversale s'étendant sur une zone comprise entre respectivement 90 à 120°, et par un profil extérieur du piston présentant un creux comparativement réduit dans la partie supérieure de la jupe.

# Fig.1

# Fig,2

0 181 652